# EUROPEAN PATENT SPECIFICATION

(11) **EP 2 099 876 B1**
(45) Date of publication and mention of the grant of the patent: **24.10.2012**
(21) Application number: 08704575.3
(22) Date of filing: 03.01.2008
(51) Int. Cl.: C09D 167/00

(54) **COATING COMPOSITIONS HAVING A SUPERIOR HIGH ADHESIVE STRENGTH ON CYCLOOLEFIN POLYMER FILMS AND CYCLOOLEFIN POLYMER FILMS COMPRISING COATING LAYER MANUFACTURED BY USING THE SAME**
BESCHICHTUNGSZUSAMMENSETZUNGEN MIT AUSSERORDENTLICH HOHER HAFTUNGSSTÄRKE AUF CYCLOOLEFIN-POLYMER-FOLIEN UND CYCLOOLEFIN-POLYMER-FOLIEN MIT EINER UNTER VERWENDUNG DER ZUSAMMENSETZUNG HERGESTELLTEN BESCHICHTUNG
COMPOSITIONS DE REVÊTEMENT AYANT UNE FORCE ADHÉSIVE SUPER ÉLEVÉE SUR DES FILMS DE POLYMÈRE DE CYCLO-OLÉFINE ET FILMS DE POLYMÈRE DE CYCLO-OLÉFINE COMPRENANT UNE COUCHE DE REVÊTEMENT FABRIQUÉE À L'AIDE DE CES COMPOSITIONS

(30) Priority: 04.01.2007 KR 20070000965
(43) Date of publication of application: 16.09.2009
(73) Proprietor: LG Chem, Ltd., Youngdungpo-gu, Seoul 150-721 (KR)
(72) Inventor: YUN, Hansik, Yuseong-gu, Daejeon, 205-380 (KR); CHANG, Yeong-Rae, Daejeon Metropolitan City 305-150 (KR); SHIM, Jae-Hoon, Daejeon Metropolitan City 305-728 (KR); KOO, Jae Pil, Seoul 138-151 (KR); KWON, Dong-Joo, Daejeon Metropolitan City 305-390 (KR)
(74) Representative: Goddar, Heinz J.
(86) International application number: PCT/KR2008/000034
(87) International publication number: WO 2008/082257

(56) References cited:
- EP-A2- 0 333 007
- US-A- 5 446 083
- US-B1- 6 248 811
- US-B2- 7 098 257

## Description

### Technical Field

The present invention relates to a coating composition having excellent adhesion strength in respects to a cycloolefin film. More particularly, the present invention pertains to a coating composition of a cycloolefin film which is capable of providing a coating layer having excellent adhesion strength in respects to a cycloolefin film, while desirable optical properties such as a dazzling prevention property and a reflection prevention property and desirable mechanical properties such as scratch resistance and abrasion resistance which are capable of being obtained in a known technology are maintained, even though an optical film (hereinafter, referred to as "cycloolefin film") that is made of a cycloolefin polymer or copolymer resin is not subjected to a hydrophilic surface treatment process such as corona, plasma and the like. The coating composition according to the present invention may be used as a hard coating composition or a dazzling prevention coating composition. This application claims priority from Korean Patent Application No. 10-2007-0000965 filed on January 4, 2007 in the KIPO.

### Background Art

Since the beginning of an information-oriented society, various types of displays such as liquid crystal displays (LCD), plasma display panels (PDP), and electrophoretic displays (ELD) have been developed and commercialized. A display device for interior display tends toward enlargement and slimness, and a portable exterior display device tends toward size reduction and lightness. Accordingly, currently, it is necessary to minimize the thickness of the display, and various types of optical films have been used to accomplish the minimization.

The material that is applied to the above optical film depends on the type of displays. In general, it is required that the material has desirable physical properties such as high transparency, desirable optical isotropic property, no defective surface, high heat resistance, high moisture resistance, high softness, high surface hardness, low shrinkage, and desirable treatment easiness of processes.

Examples of the material of the general optical film include triacetyl cellulose, polyethylene terephthalate, polymethyl methacrylate, polycarbonate, and the like, and the material is selected according to the display condition and the intrinsic physical properties of the material of the optical film and is used to manufacture the optical film.

However, in general, the optical film is not used while a predetermined treatment process is not performed but is subjected to a surface coating treatment process in order to make up for poor physical properties of the material of the optical film caused by the intrinsic characteristics of the material and to provide additional display functions. In particular, if the optical film is disposed at the outermost portion of the display, it is very important to provide external wound prevention, dazzling prevention, reflection prevention, anti-static, and contamination resistance properties.

Currently, in a polarizing plate for LCD, triacetyl cellulose films having characteristics such as high transparency, desirable optical isotropic property, no defective surface and the like are used as a protective film for protecting the polarizing film made of polyvinyl alcohol at both sides of the polarizing film. However, since the triacetyl cellulose film is weak to heat and moisture, if the triacetyl cellulose film is used in a high temperature and high humidity atmosphere for a long period of time, problems such as a reduction in the degree of polarization and excessive leakage of light at an edge of the film, that is, light leakage, caused by degradation due to moisture occur. Thus, the durability is reduced.

In order to avoid the above-mentioned problems, Korean Unexamined Patent Application Publication No. 2004-0071485 (published on August 12, 2004) discloses a method of using a cycloolefin resin instead of triacetyl cellulose. The cycloolefin resin may be called a norbornene resin, and includes a cycloolefin polymer and a cycloolefin copolymer of cycloolefins and linear olefins mixed with each other.

Since the above cycloolefin resin contains hydrocarbons in a high amount, in the cycloolefin resin, the dielectric constant is low, birefringence does not occur due to the electrically excellent isotropic property, the moisture absorbing property is low, the resin has the amorphous shape, and light absorption in a visible ray region due to n-conjugation does not occur. Thus, light transmissivity is excellent and a retardation is provided by strethcing treatment. Accordingly, the cycloolefin resin may be used to manufacture a retardation film.

However, in the general cycloolefin resin, since norbornene having no polarizing group or the very weak polarity is used as the monomer, there is a problem in that the interlayer adhesion strength in respects to the polyvinyl alcohol polarizing film having the very high polarity is reduced as compared to the case of when the other known optical films are used. Furthermore, there is a problem in that the adhesion strength is significantly reduced in respects to the coating film when the film is subjected to a surface coating treatment process that is performed to provide additional functions. surface coating treatment process that is performed to provide additional functions.

In order to avoid the above-mentioned disadvantages, methods of manufacturing various types of cycloolefin optical films, which include adding other predetermined components to the cycloolefin resin, modifying the polymer, or controlling the molecular weight, are suggested. However, in the methods, there is a problem in that optical characteristics, affinity between components, and strength of the optical film are reduced.

Another method includes performing hydrophilic surface treatment in respects to a cycloolefin film by using corona, plasma or the like, and performing a coating process to improve the adhesion strength. However, in this method, there are problems in that an increase in cost and a reduction in productivity occur due to addition of the surface treatment process and the yield of products is reduced due to byproducts and contaminants remaining in the products during the surface treatment process.

EP 0 333 007 relates to UV coatings containing chlorinated polyolefins, method of curing, and coated substrates there from. Disclosed is a coating composition which crosslinks upon exposure to ultraviolet radiation. Also disclosed is a plastic article having directly adhered to a surface thereof.

Therefore, there remains a need to develop a coating composition and a method which are capable of significantly improving the adhesion strength between the cycloolefin film and the surface coating film while the polymer is not modified or the optical film is not subjected to the surface treatment before the coating during manufacturing of the optical film.

### Disclosure of Invention

### Technical Problem

Therefore, the present invention has been made keeping in mind the above-mentioned problems occurring in the related art, and an object of the present invention is to provide a coating composition of a cycloolefin film which has excellent adhesion strength in respects to the cycloolefin film, while desirable optical properties such as a dazzling prevention property and a reflection prevention property and desirable mechanical properties such as scratch resistance and abrasion resistance which are capable of being obtained in a known technology are maintained, by applying an olefin resin to the coating composition even though a cycloolefin film is not subjected to a hydrophilic surface treatment process such as corona, plasma and the like. The coating composition according to the present invention may be used as a hard coating composition or a dazzling prevention coating composition. In addition, it is another object of the present invention to provide a cycloolefin film that has a coating layer formed by using the coating composition.

### Technical Solution

In order to accomplish the above object, the present invention provides a coating composition of a cycloolefin film that includes 100 parts by weight of an acrylate binder resin, 5 to 50 parts by weight of an olefin resin, 2 to 20 parts by weight of a photoinitiator, and 80 to 400 parts by weight of a solvent wherein the olefin resin includes one or more selected from the group consisting of an olefin elastomer and an olefin block copolymer, the olefin elastomer includes one or more selected from the group consisting of an ethylene-vinyl acetate copolymer, an ethylene-methyl acrylate copolymer, an ethylene-ethyl acrylate copolymer, and an ethylene-normal-butyl acrylate copolymer, and the olefin block copolymer includes one or more selected from the group consisting of a styrene-isoprene-styrene block copolymer, a styrene-butadiene-styrene block copolymer, a styrene-ethylene-butylene-styrene block copolymer, and a styrene-ethylen-propylene-styrene block copolymer. The composition can provide a coating layer that has the excellent adhesion strength in respects to the cycloolefin film while excellent mechanical properties such as scratch resistance and abrasion resistance are maintained. Thus, the composition can be used as a hard coating composition in respects to the cycloolefin film.

The above coating composition of the cycloolefin film according to the present invention may further include 1 to 20 parts by weight of fine particles having an average particle size in the range of 0.5 to 5 µm. In this case, it is possible to provide the coating layer that has excellent mechanical properties such as scratch resistance and abrasion resistance, excellent optical properties such as a dazzling prevention property and a reflection prevention property, and the excellent adhesion strength in respects to the cycloolefin film. Accordingly, the above coating composition of the cycloolefin film can be used as a dazzling prevention coating composition in respects to the cycloolefin film.

The above coating composition of the cycloolefin film according to the present invention may further include a surfactant in an amount of more than 0 and 10 parts by weight or less based on 100 parts by weight of the acrylate binder resin.

In addition, the present invention provides a cycloolefin film that includes a coating layer formed by using the above coating composition. Preferred embodiments are disclosed in the subclaims.

### Advantageous Effects

A coating composition of a cycloolefin film according to the present invention is capable of providing a coating layer having excellent adhesion strength in respects to the cycloolefin film while desirable optical properties such as a dazzling prevention property and a reflection prevention property and desirable mechanical properties such as scratch resistance and abrasion resistance which are capable of being obtained in a known technology are maintained even though the cycloolefin film is not subjected to a hydrophilic surface treatment process such as corona, plasma and the like. Therefore, the cycloolefin film that has the coating layer which is formed by using the coating composition of the cycloolefin film according to the present invention has the excellent adhesion strength in respects to the coating layer while desirable optical properties and desirable mechanical properties which are capable of being obtained in a known coating treatment technology are maintained.

### Best Mode for Carrying Out the Invention

Hereinafter, the present invention will be described in detail.

The present inventors have conducted a study of a UV curable acryl hard coating composition and a dazzling prevention coating composition which are capable of improving the adhesion strength in respects to a cycloolefin film, resulting in the finding that when an olefin resin is added to an acrylate binder resin, the adhesion strength is improved in respects to the cycloolefin film while known optical and mechanical properties of a hard coating film and a dazzling prevention coating film are not significantly reduced. Thereby, the present invention is accomplished.

The coating composition of the cycloolefin film according to the present invention is characterized in that the coating composition contains 100 parts by weight of an acrylate binder resin, 5 to 50 parts by weight of an olefin resin, 2 to 20 parts by weight of a photoinitiator, and 80 to 400 parts by weight of a solvent wherein the olefin resin includes one or more selected from the group consisting of an olefin elastomer and an olefin block copolymer, the olefin elastomer includes one or more selected from the group consisting of an ethylene-vinyl acetate copolymer, an ethylene-methyl acrylate copolymer, an ethylene-ethyl acrylate copolymer and an ethylene-normal-butyl acrylate copolymer, and the olefin block copolymer includes one or more selected from the group consisting of a styrene-isoprene-styrene block copolymer, a styrene-butadiene-styrene block copolymer, a styrene-ethylene-butylene-styrene block copolymer, and a styrene-ethylen-propylene-styrene block copolymer. The coating composition of the cycloolefin film according to the present invention may further contain a surfactant in an amount of more than 0 part by weight and 10 parts by weight or less based on 100 parts by weight of the above acrylate binder resin.

In the case of when the above coating composition of cycloolefin film is applied on the cycloolefin film and the like, the adhesion strength is excellent in respects to the cycloolefin film and mechanical properties such as scratch resistance and abrasion resistance are excellent. Thus, the coating composition may function to protect the cycloolefin film from external chemical or physical force to increase the durability. Accordingly, the above coating composition of the cycloolefin film may be used as a hard coating composition in respects to the cycloolefin film.

The above acrylate binder resin may include an acrylate monomer and an oligomer.

It is preferable that a compound having 1 to 6 acrylate functional groups be used as the above acrylate monomer. Examples of the acrylate monomer include dipentaerythritol hexaacrylate, pentaerythritol tetraacrylate, pentaerythritol triacrylate, trimethylenepropyl triacrylate, hexanediol diacrylate, ethyl acrylate, ethylhexyl acrylate, butyl acrylate, isobonyl acrylate, octadecyl acrylate, 2-hydroxyethyl acrylate, methyl methacrylate, butyl methacrylate, hexanediol diacrylate, dipropylene glycol diacrylate, triethylene glycol diacrylate, tripropylene glycol diacrylate, hydroxyethyl acrylate, betacarboxyethyl acrylate and the like.

In general, a urethane modified acrylate oligomer, an epoxy acrylate oligomer, or an ether acrylate oligomer having 2 to 6 acrylate functional groups may be used as the above acrylate oligomer. In particular, it is preferable that a weight average molecular weight be in the range of 500 to 10,000.

The above olefin resin includes all polymer and copolymer resins containing an olefin compound having a linear or cyclic olefin structure. It is preferable that the above olefin resin have a weight average molecular weight in the range of 500 to 10,000,000.

It is preferable that the above olefin resin be contained in a content of 5 to 50 parts by weight based on 100 parts by weight of the acrylate binder resin. If the content is less than 5 parts by weight, there is a problem in that the adhesion strength in respects to a base substrate is reduced. If the content is more than 50 parts by weight, there is a problem in that the scratch resistance and the abrasion resistance of the coating film are reduced.

It is preferable that a compound capable of being decomposed by using ultraviolet rays be used as the above photoinitiator. Examples of the compound include 1-hydroxycyclohexyl phenyl ketone, benzyl dimethyl ketal, hydroxydimethyl acetophenone, benzoin, benzoin methyl ether, benzoin ethyl ether or the like.

It is preferable that the above photoinitiator be contained in a content of 2 to 20 parts by weight based on 100 parts by weight of the acrylate binder resin. If the content is less than 2 parts by weight, there is a problem in that uncuring of the coating film occurs. If the content is more than 20 parts by weight, there is a problem in that the scratch resistance and the abrasion resistance of the coating film are reduced.

A leveling agent, a wetting agent or the like may be used as the above surfactant, and it is particularly preferable to use a fluorine compound or a polysiloxane compound.

It is preferable that the above surfactant be contained in a content of less than 10 parts by weight based on 100 parts by weight of the acrylate binder resin. If the content is more than 10 parts by weight, there is a problem in that the adhesion strength in respects to the base substrate is reduced and the scratch resistance and the abrasion resistance of the coating film are reduced.

Alcohol, acetate, ketone, and aromatic solvents and the like may be used as the above solvent, and examples of the solvent may include methanol, ethanol, isopropyl alcohol, butanol, 2-methoxyethanol, 2-ethoxyethanol, 2- butoxyethanol, 2-isopropoxyethanol, methyl acetate, ethyl acetate, butyl acetate, methyl ethyl ketone, methyl isobutyl ketone, cyclohexane, cyclohexanone, toluene, xylene, and benzene.

It is preferable that the above solvent be included in a content in the range of 80 to 400 parts by weight based on 100 parts by weight of the acrylate binder resin. If the content of the above solvent is less than 80 parts by weight, the viscosity of the coating composition is increased. Thus, there is a problem in that the degree of flatness of the coating film is reduced, causing a decrease in a coating property. If the content is more than 400 parts by weight, there is a problem in that the scratch resistance and the coating machine and a base substrate.

The coating composition of the cycloolefin film according to the present invention may further include 1 to 20 parts by weight of the fine particles having the average particle size in the range of 0.5 to 5 µm. In this case, it is possible to provide the coating layer that has the excellent mechanical properties such as the scratch resistance, the abrasion resistance and the like, the excellent optical properties such as the dazzling prevention property, the reflection prevention property and the like, and the high adhesion strength in respects to the cycloolefin film. Therefore, the coating composition of the cycloolefin film according to the present invention may be used as the dazzling prevention coating composition in respects to the cycloolefin film.

The above fine particle is a definite or amorphous form particle that is made of an organic substance or an inorganic substance and has an average particle size in the range of 0.5 to 5 µm. It is preferable that the above fine particle be included in a content of 1 to 20 parts by weight based on 100 parts by weight of the acrylate binder resin. If the content is less than 1 part by weight, there is a problem in that since the fine particle is buried in the acrylate binder resin, the insufficient effect of the dazzling prevention is obtained. If the content is more than 20 parts by weight, there is a problem in that an optical property required in displays is significantly reduced.

In addition, the present invention provides a cycloolefin film that includes a coating layer manufactured by using the above-mentioned coating composition of the cycloolefin film according to the present invention. The above coating layer may act as a hard coating layer or a dazzling prevention layer. The above coating layer is not limited, and it is preferable that the thickness of the coating layer be in the range of 0.01 to 1,000 µm.

The above coating layer may be formed by applying the above-mentioned coating composition of the cycloolefin film according to the present invention on the cycloolefin film and, if necessary, drying and curing the resulting coating composition. A method which is known in the related art may be used as the method of forming the coating layer.

The above cycloolefin film means a film that includes a polymer or copolymer resin having a cycloolefin structure. The type of above polymer or copolymer resin having the cycloolefin structure is not limited as long as the polymer or copolymer resin is known in the art.

In the art, a film means a thin film, and a sheet means a structure that is relatively thicker than the film. Sometimes, the above sheet may mean a cloth. However, those definitions are ideal without an objective standard. However, in the specification of the present invention, the term "film" includes the thin film and all structures that have a thickness corresponding to the sheet, and the shape of the film is not limited. For example, the above cycloolefin film includes a film having a thickness in the range of 0.5 µm to 0.5 mm and a sheet having a thickness in the range of 0.5 mm to 1000 mm. It is preferable that the thickness of the above cycloolefin film be in the range of 1 µm to 100 mm.

### Mode for the Invention

A better understanding of the present invention may be obtained in light of the following Examples which are set forth to illustrate, but are not to be construed to limit the present invention.

[EXAMPLE]

<Preparation of the hard coating solution composition>

EXAMPLE 1

17 parts by weight of the ethylene/vinyl acetate copolymer (weight average molecular weight: 500,000) that was used as the olefin resin, 13 parts by weight of 1-hydroxycyclohexyl phenyl ketone that was used as the photoinitiator, 0.9 parts by weight of the wetting agent (Tego 270, manufactured by Tego, Co.) that was used as the surfactant, and 217 parts by weight of cyclohexane and 87 parts by weight of methyl ethyl ketone that were used as the solvent were mixed with 100 parts by weight of the acrylate binder resin that included 22 parts by weight of dipentaerythritol hexaacrylate, 13 parts by weight of hexanediol diacrylate, and 65 parts by weight of the urethane modified acrylate oligomer (weight average molecular weight: 800, 6 acrylate functional groups, manufactured by SK Cytec, Co., Ltd.) at normal temperature to prepare the hard coating solution composition.

COMPARATIVE EXAMPLE 1

13 parts by weight of 1-hydroxycyclohexyl phenyl ketone that was used as the photoinitiator, 0.9 parts by weight of the wetting agent (Tego 270, manufactured by Tego, Co.) that was used as the surfactant, and 217 parts by weight of cyclohexane and 87 parts by weight of methyl ethyl ketone that were used as the solvent were mixed with 100 parts by weight of the acrylate binder resin that included 22 parts by weight of dipentaerythritol hexaacrylate, 13 parts by weight of hexanediol diacrylate, and 65 parts by weight of the urethane modified acrylate oligomer (weight average molecular weight: 800, 6 acrylate functional groups, manufactured by SK Cytec, Co., Ltd.) at normal temperature to prepare the hard coating solution composition.

<Preparation of the dazzling prevention coating solution composition>

EXAMPLE 2

22 parts by weight of the styrene/butadiene/styrene copolymer (LG Chemicals, Co., Ltd., LG604) that was used as the olefin resin, 2.2 parts by weight of silica (OK607, manufactured by Degussa Co., Ltd.) that was used as the fine particle and had the average particle size of 2 µm, 13 parts by weight of 1-hydroxycyclohexyl phenyl ketone that was used as the photoinitiator, 0.9 parts by weight of the wetting agent (Tego 270, manufactured by Tego, Co.) that was used as the surfactant, and 217 parts by weight of toluene and 87 parts by weight of methyl isobutyl ketone that were used as the solvent were mixed with 100 parts by weight of the acrylate binder resin that included 22 parts by weight of dipentaerythritol hexaacrylate, 13 parts by weight of beta carboxyethyl acrylate, and 65 parts by weight of the urethane modified acrylate oligomer (weight average molecular weight 800, 6 acrylate functional groups, manufactured by SK Cytec, Co., Ltd.) to prepare the dazzling prevention coating solution composition.

COMPARATIVE EXAMPLE 2

2.2 parts by weight of silica (OK607, manufactured by Degussa Co., Ltd.) that was used as the fine particle and had the average particle size of 2 µm, 13 parts by weight of 1-hydroxycyclohexyl phenyl ketone that was used as the photoinitiator, 0.9 parts by weight of the wetting agent (Tego 270, manufactured by Tego, Co.) that was used as the surfactant, and 217 parts by weight of toluene and 87 parts by weight of methyl isobutyl ketone that were used as the solvent were mixed with 100 parts by weight of the acrylate binder resin that included 22 parts by weight of dipentaerythritol hexaacrylate, 13 parts by weight of beta-carboxyethyl acrylate, and 65 parts by weight of the urethane modified acrylate oligomer (weight average molecular weight: 1000, 6 acrylate functional groups, manufactured by SK Cytec, Co., Ltd.) at normal temperature to prepare the dazzling prevention coating solution composition.

EXPERIMENTAL EXAMPLE

The cycloolefin film (Zeonor, manufactured by ZEON, Co., Ltd.) having a thickness of 60 µm was coated with the coating solution composition which was prepared in the Examples 1 to 2 and the Comparative Examples 1 to 2 by using a wire bar (No. 10), dried in the oven at 60°C for 2 min, and cured by using UV (ultraviolet rays) of 1 J/cm² to manufacture the coated cycloolefin film.

Physical properties, such as transmissivity, haze, adhesion strength, and scratch resistance, of the coated cycloolefin film were measured by using the following method, and the results are described in the following Table 1.

A) Transmissivity and haze - The transmissivity and the haze were measured by using HR100 (manufactured by Murakami, Co., Ltd. in Japan)

B) Adhesion strength - The adhesion strength was measured by attaching the tape to the cross cut portion according to the cross cut (10 X 10) tape method, removing the tape, and observing the ratio of the residual portion of the film.

C) Scratch resistance - The load of 1 kg was applied to the wear test specimen that was provided with the steel wool (grade #0000), the coated film was rubbed with the specimen, and the scratches were observed by the naked eye, so that the scratch resistance was evaluated to be good, fair, or poor.

Table 1

**[Table 1]**

| [Table] | | | | |
|---|---|---|---|---|
| (Cycloolefin film) | Example 1 | Comparative Example 1 | Example 2 | Comparative Example 2 |
| Transmissivity (%) | 93.7 | 93.8 | 93.0 | 93.2 |
| Haze (%) | 0.3 | 0.2 | 9.7 | 9.5 |
| Adhesion strength (%) | 100 | 0 | 100 | 0 |
| Scratch resistance | Good | Good | Good | Good |

From the above Table 1, it could be seen that the cycloolefin film that was treated with the hard coating solution (Example 1) containing the olefin resin according to the present invention had the very high adhesion strength while the desirable transmissivity, transparency, and scratch resistance were maintained as compared to the cycloolefin film that was treated with the hard coating solution (Comparative Example 1) containing no olefin resin.

In addition, it could be seen that the cycloolefin film that was treated with the dazzling prevention coating solution composition (Example 2) containing the olefin resin according to the present invention had the very high adhesion strength while the desirable transmissivity, transparency, and scratch resistance were maintained as compared to the cycloolefin film that was treated with the dazzling prevention coating solution composition (Comparative Example 2) containing no olefin resin.

## Claims

1. A coating composition of a cycloolefin film comprising:
100 parts by weight of an acrylate binder resin;
5 to 50 parts by weight of an olefin resin;
2 to 20 parts by weight of a photoinitiator; and
80 to 400 parts by weight of a solvent,
wherein the olefin resin includes one or more selected from the group consisting of an olefin elastomer and an olefin block copolymer,
the olefin elastomer includes one or more selected from the group consisting of an ethylene-vinyl acetate copolymer, an ethylene-methyl acrylate copolymer, an ethylene-ethyl acrylate copolymer, and an ethylene-normal-butyl acrylate copolymer, and
the olefin block copolymer includes one or more selected from the group consisting of a styrene-isoprene-styrene block copolymer, a styrene-butadiene-styrene block copolymer, a styrene-ethylene-butylene-styrene block copolymer, and a styrene-ethylene-propylene-styrene block copolymer.

2. The coating composition of a cycloolefin film as set forth in claim 1, wherein the acrylate binder resin includes one or more selected from the group consisting of an acrylate monomer and an acrylate oligomer.

3. The coating composition of a cycloolefin film as set forth in claim 2, wherein the acrylate monomer is a compound having 1 to 6 acrylate functional groups.

4. The coating composition of a cycloolefin film as set forth in claim 3, wherein the acrylate monomer includes one or more selected from the group consisting of dipentaerythritol hexaacrylate, pentaerythritol tetraacrylate, pentaerythritol triacrylate, trimethylenepropyl triacrylate, hexanediol diacrylate, ethyl acrylate, ethylhexyl acrylate, butyl acrylate, isobornyl acrylate, octadecyl acrylate, 2-hydroxyethyl acrylate, methyl methacrylate, butyl methacrylate, hexanediol diacrylate, dipropylene glycol diacrylate, triethylene glycol diacrylate, tripropylene glycol diacrylate, and hydroxyethyl acrylate.

5. The coating composition of a cycloolefin film as set forth in claim 2, wherein the acrylate oligomer has an average molecular weight in the range of 500 to 10,000 and 2 to 6 acrylate functional groups.

6. The coating composition of a cycloolefin film as set forth in claim 1, wherein the solvent includes one or more selected from the group consisting of alcohol, acetate, ketone, and aromatic compounds.

7. The coating composition of a cycloolefin film as set forth in claim 1, further comprising a surfactant in a content of more than 0 part by weight and 10 parts by weight or less based on 100 parts by weight of the acrylate binder resin.

8. The coating composition of a cycloolefin film as set forth in claim 7, wherein the surfactant is a leveling agent or a wetting agent.

9. The coating composition of a cycloolefin film as set forth in any one of claims 1 to 8, further comprising 1 to 20 parts by weight of fine particles having an average particle size in the range of 0.5 to 5 µm based on 100 parts by weight of the acrylate binder resin.

10. A cycloolefin film comprising a coating layer that is formed by using the coating composition of cycloolefin film according to any one of claims 1 to 8.

11. The cycloolefin film as set forth in claim 10, wherein a thickness of the cycloolefin film is in the range of 0.5 µm to 1000 mm.

12. A cycloolefin film comprising a coating layer that is formed by using the coating composition of cycloolefin film according to claim 9.

13. The cycloolefin film as set forth in claim 12, wherein a thickness of the cycloolefin film is in the range of 0.5 µm to 1000 mm.

## Patentansprüche

1. Beschichtungszusammensetzung eines Cycloolefinfilms, umfassend:
100 Gewichtsteile eines Acrylatbinderharzes;
5 bis 50 Gewichtsteile eines Olefinharzes;
2 bis 20 Gewichtsteile eines Photoinitiators; und
80 bis 400 Gewichtsteile eines Lösungsmittels,
wobei das Olefinharz eines oder mehrere, ausgewählt aus der Gruppe, bestehend aus einem Olefinelastomer und einem Olefinblockcopolymer, einschließt,
das Olefinelastomer eines oder mehrerer, ausgewählt aus der Gruppe bestehend aus einem Ethylen-Vinylacetat-Copolymer, einem Ethylen-Methylacrylat-Copolymer, einem Ethylen-Ethylacrylat-Copolymer und einem Ethylen-normal-Butylacrylat-Copolymer, einschließt, und
das Olefinblockcopolymer eines oder mehrere, ausgewählt aus der Gruppe bestehend aus einem Styrol-Isopren-Styrol-Blockcopolymer, einem Styrol-Butadien-Styrol-Blockcopolymer, einem Styrol-Ethylen-Butylen-Styrol-Blockcopolymer und einem Styrol-Ethylen-Propylen-Styrol-Blockcopolymer, einschließt.

2. Beschichtungszusammensetzung eines Cycloolefinfilms nach Anspruch 1, wobei das Acrylatbinderharz eines oder mehrere, ausgewählt aus der Gruppe bestehend aus einem Acrylatmonomer und einem Acrylatoligomer, einschließt.

3. Beschichtungszusammensetzung eines Cycloolefinfilms nach Anspruch 2, wobei das Acrylatmonomer eine Verbindung ist, die 1 bis 6 Acrylat-funktionelle Gruppen hat.

4. Beschichtungszusammensetzung eines Cycloolefinfilms nach Anspruch 3, wobei das Acrylatmonomer eines oder mehrere, ausgewählt aus der Gruppe bestehend aus Dipentaerythritolhexaacrylat, Pentaerythritoltetraacrylat, Pentaerythritoltriacrylat, Trimethylenpropyltriacrylat, Hexdioldiacrylat, Ethylacrylat, Ethylhexylacrylat, Butylacrylat, Isobornylacrylat, Octadecylacrylat, 2-Hydroxyethylacrylat, Methylmethacrylat, Butylmethacrylat, Hexandioldiacrylat, Dipropylenglykoldiacrylat, Triethylenglykoldiacrylat, Tripropylenglykoldiacrylat und Hydroxyethylacrylat, einschließt.

5. Beschichtungszusammensetzung eines Cycloolefinfilms nach Anspruch 2, wobei das Acrylatoligomer ein durchschnittliches Molekulargewicht in einem Bereich von 500 bis 10.000 und 2 bis 6 Acrylat-funktionelle Gruppen hat.

6. Beschichtungszusammensetzung eines Cycloolefinfilms nach Anspruch 1, wobei das Lösungsmittel eines oder mehrere, ausgewählt aus der Gruppe bestehend aus Alkohol, Acetat, Keton und aromatischen Verbindungen, einschließt.

7. Beschichtungszusammensetzung eines Cycloolefinfilms nach Anspruch 1, zusätzlich umfassend ein Tensid in einem Gehalt von mehr als 0 Gewichtsteilen und 10 Gewichtsteilen oder weniger, bezogen auf 100 Gewichtsteile des Acrylatbinderharzes.

8. Beschichtungszusammensetzung eines Cycloolefinfilms nach Anspruch 7, wobei das Tensid ein Verlaufsmittel oder ein Benetzungsmittel ist.

9. Beschichtungszusammensetzung eines Cycloolefinfilms nach einem der Ansprüche 1 bis 8, zusätzlich umfassend 1 bis 20 Gewichtsteile Feinpartikel einer durchschnittlichen Partikelgröße in einem Bereich von 0,5 bis 5 µm, bezogen auf 100 Gewichtsteile des Acrylatbinderharzes.

10. Cycloolefinfilm, umfassend eine Beschichtungsschicht, die durch das Verwenden der Beschichtungszusammensetzung eines Cycloolefinfilms nach einem der Ansprüche 1 bis 8 gebildet ist.

11. Cycloolefinfilm nach Anspruch 10, wobei die Dicke des Cycloolefinfilms in einem Bereich von 0,5 µm bis 1000 mm ist.

12. Cycloolefinfilm, umfassend eine Beschichtungsschicht, die durch das Verwenden der Beschichtungszusammensetzung eines Cycloolefinfilms nach Anspruch 9 gebildet ist.

13. Cycloolefinfilm nach Anspruch 12, wobei die Dicke des Cycloolefinfilms in einem Bereich von 0,5 µm bis 1000 mm ist.

## Revendications

1. Composition d'enrobage constituée d'une pellicule cyclooléfinique comprenant :
100 parties en poids d'une résine liante d'acrylate :
5 à 50 parties en poids d'une résine d'oléfine ;
2 à 20 parties en poids d'un photoamorceur ; et
80 à 400 parties en poids d'un solvant,
dans laquelle la résine d'oléfine renferme un ou plusieurs composés sélectionné(s) parmi le groupe constitué d'un élastomère d'oléfine et d'un copolymère bloc d'oléfine,
l'élastomère d'oléfine renferme un ou plusieurs composés sélectionné(s) parmi le groupe constitué d'un copolymère d'acétate de vinyle d'éthylène, un copolymère d'acrylate de méthyle d'étyléne, d'un copolymère d'acrylate d'éthyle d'éthylène et d'un copolymère de butyle normal d'éthylène et
le copolymère bloc d'oléfine renferme un ou plusieurs composés sélectionné(s) parmi le groupe constitué d'un copolymère bloc de styrène-isoprène-styrène, d'un copolymère bloc de styrène-butadiène-styrène, d'un copolymère bloc de styréne-étylène-butylène-styrène et d'un copolymère bloc de styrène-éthylène-propylène-styrène.

2. Composition d'enrobage constituée d'une pellicule cyclooléfinique selon la revendication 1, dans laquelle la résine liante d'acrylate renferme un ou plusieurs composés sélectionné(s) parmi le groupe constitué d'un monomère d'acrylate et d'un oligomère d'acrylate.

3. Composition d'enrobage constituée d'une pellicule cyclooléfinique selon la revendication 2, dans laquelle le monomère d'acrylate est un composé renfermant 1 à 6 groupes fonctionnels d'acrylate.

4. Composition d'enrobage constituée d'une pellicule cyclooléfinique selon la revendication 3, dans laquelle le monomère d'acrylate renferme un ou plusieurs composés sélectionné(s) parmi le groupe constitué d'hexaacrylate de dipentaérythritol, de tétraacrylate de pentaérythritol, de triacrylate de pentaérythritol, de triacrylate de triméthylène propyle, de diacrylate d'hexanédiol, d'acrylate d'éthyle, d'acrylate d'éthyle hexyle, d'acrylate de butyle, d'acrylate d'isobonyle, d'acrylate d'octadécyle, d'acrylate de 2-hydroxyéthyle, de méthacrylate de méthyle, de méthacrylate de butyle, de diacrylate d'héxanédiol, de diacrylate de dipropylène glycol, de diacrylate de triéthylène glycol, de diacrylate de tripropylène glycol et d'acrylate d'hydroxyéthyle.

5. Composition d'enrobage constituée d'une pellicule cyclooléfinique selon la revendication 2, dans laquelle l'oligomère d'acrylate a un poids moléculaire moyen situé dans la plage de 500 à 10,000 et contient 2 à 6 groupes fonctionnels d'acrylate.

6. Composition d'enrobage constituée d'une pellicule cyclooléfinique selon la revendication 1, dans laquelle le solvant renferme un ou plusieurs composés sélectionné(s) parmi le groupe constitué d'alcool, d'acétate, de cétone et de composés aromatiques.

7. Composition d'enrobage constituée d'une pellicule cyclooléfinique selon la revendication 1, renfermant en outre un surfactant selon une teneur de plus de 0 partie en poids et de 10 parties en poids ou moins basée sur 100 parties en poids de la résine liante d'acrylate.

8. Composition d'enrobage constituée d'une pellicule cyclooléfinique selon la revendication 7, dans laquelle le surfactant est un agent de nivellement ou un agent mouillant.

9. Composition d'enrobage constituée d'une pellicule cyclooléfinique selon l'une quelconque des revendications 1 à 8, renfermant en outre 1 à 20 parties en poids de fines particules ayant une grosseur moyenne de particules située dans la plage de 0,5 à 5 µm basée sur 100 parties en poids de la résine liante d'acrylate.

10. Pellicule cyclooléfinique comprenant une couche d'enrobage qui est formée en utilisant la composition d'enrobage constituée d'une pellicule cyclooléfinique selon l'une quelconque des revendications 1 à 8.

11. Pellicule cyclooléfinique selon la revendication 10, dans laquelle une épaisseur de la pellicule cycloolifinique se situe dans la plage de 0,5 µm à 1000 mm.

12. Pellicule cyclooléfinique comprenant une couche d'enrobage qui est formée en utilisant la composition d'enrobage constituée d'une pellicule cyclooléfinique selon la revendication 9.

13. Pellicule cyclooléfinique selon la revendication 12, dans laquelle une épaisseur de la pellicule cycloolifinique se situe dans la plage de 0,5 µm à 1000 mm.
